# EUROPEAN PATENT APPLICATION

(11) **EP 4 768 313 A1**
(43) Date of publication of application: **01.07.2026**
(21) Application number: 25223987.6
(22) Date of filing: 16.12.2025
(51) Int. Cl.: B60L 53/10, B60L 53/14, B60L 53/51, B60L 53/62, B60L 53/63

(54) **CHARGING CONTROL SYSTEM FOR CHARGING PILE AND CHARGING CONTROL METHOD**

(30) Priority: 20.12.2024 CN 202411892224
(71) Applicant: Solax Power Network Technology (Zhejiang) Co., Ltd., Hangzhou, Zhejiang 311500 (CN)
(72) Inventor: WANG, Xiaorui, Hangzhou, 311500 (CN); GAO, Meng, Hangzhou, 311500 (CN); BAO, Gaoying, Hangzhou, 311500 (CN); CHEN, Yiji, Hangzhou, 311500 (CN)
(74) Representative: Murgitroyd & Company

(57) **Abstract**

A charging control system for a charging pile includes a utility power supply, an inverter, and a charging pile. In a green power mode, the charging pile charges a device to be charged using power generated by a photovoltaic system, and adjusts a charging current based on a current at a grid-connected port of the inverter until a power at the grid-connected port reaches zero. In an economy mode, the charging pile purchases electricity from the utility power supply for supplementation when power generated by the photovoltaic system is insufficient, and performs charging using a preset charging current; and when power generated by the photovoltaic system is sufficient, adjusts the charging current based on the current at the grid-connected port until the power at the grid-connected port reaches zero. Problems that a charging pile relies on a utility power supply directly and fails to effectively use renewable energy are resolved.

## Description

### TECHNICAL FIELD

The present application relates to the field of charging technologies, and in particular, to a charging control system for a charging pile and a charging control method.

### BACKGROUND

With the development of the global economy and the enhancement of environmental awareness, electric vehicles (Electric Vehicle, EV) have rapidly gained popularity due to their eco-friendly characteristics. However, the large-scale adoption of EVs has introduced new challenges, particularly in charging infrastructure development and power supply. Traditionally, EVs primarily rely on utility power (i.e., power provided by a power grid) for charging. This not only risks increasing the load on a power grid during peak hours, leading to an imbalance between power supply and demand, but also potentially undermines the original intention of promoting EVs to reduce carbon emissions due to massive consumption of non-renewable energy.

Currently, various types of electric vehicle charging piles are available on the market, most of which charge electric vehicles by directly using a utility power supply. Although this charging method is simple and easy to implement, it places a significant load on a power grid during peak electricity consumption hours. This issue becomes even more pronounced with the widespread adoption of electric vehicles. Furthermore, this charging method fails to effectively utilize renewable energy, particularly the power generated by solar power generation systems installed by household users, resulting in a waste of resources.

To date, no effective solutions have been proposed to address these issues.

### SUMMARY

Embodiments of the present application provide a charging control system for a charging pile and a charging control method, to at least resolve a technical problem in the related art that a charging pile of a conventional electric vehicle relies on a utility power supply directly and fails to effectively use renewable energy, leading to a heavy load to a power grid during peak hours and a waste of resources.

According to an aspect of the embodiments of the present application, a charging control system for a charging pile is provided, including: a utility power supply, configured to provide alternating current through a power grid; an inverter, configured to convert direct current generated by a photovoltaic system into alternating current; and a charging pile, connected to the utility power supply and the inverter, and configured to: obtain a current and a power at a grid-connected port of the inverter, identify a charging mode when a device to be charged is connected to the charging pile, and charge the device to be charged according to the charging mode, where the charging mode includes any one of a green power mode and an economy mode, and when the charging mode is the green power mode, the charging pile, when charging the device to be charged according to the charging mode, is specifically configured to: charge the device to be charged using power generated by the photovoltaic system, and adjust a charging current based on the current at the grid-connected port until the power at the grid-connected port reaches zero; and when the charging mode is the economy mode, the charging pile, when charging the device to be charged according to the charging mode, is specifically configured to: purchase electricity from the utility power supply for supplementation when power generated by the photovoltaic system is insufficient, and charge the device to be charged using a preset charging current; and when power generated by the photovoltaic system is sufficient, adjust the charging current based on the current at the grid-connected port until the power at the grid-connected port reaches zero.

Optionally, when the charging mode is the green power mode and no communication connection is established between the charging pile and the inverter, the charging pile is further configured to: acquire the current at the grid-connected port using an external current sensor, and perform a corresponding charging procedure based on the current at the grid-connected port.

Optionally, when performing the corresponding charging procedure based on the current at the grid-connected port, the charging pile is specifically configured to: determine, when the charging pile starts charging, whether the current at the grid-connected port is greater than or equal to a preset first charging current, start charging if the current at the grid-connected port is greater than or equal to the first charging current, and suspend charging if the current at the grid-connected port is less than the first charging current; and adjust the charging current in real time based on the current at the grid-connected port in a process of charging by the charging pile; increase the charging current when electricity is sold to the power grid through the grid-connected port; reduce the charging current when electricity is purchased from the power grid through the grid-connected port; and suspend charging if the charging current is reduced to the first charging current and duration of purchasing electricity from the power grid through the grid-connected port meets a preset first time threshold.

Optionally, when the charging pile suspends charging, the charging pile is further configured to: detect, in real time, whether the current at the grid-connected port is greater than or equal to the first charging current; and start charging if the current at the grid-connected port is greater than or equal to the first charging current and duration of selling electricity to the power grid through the grid-connected port meets a preset second time threshold.

Optionally, when the charging mode is the green power mode and a communication connection is established between the charging pile and the inverter, the charging pile is further configured to: communicate with the inverter via a bus, and perform a corresponding charging procedure based on the current at the grid-connected port and whether the inverter is photovoltaic-limited.

Optionally, when performing the corresponding charging procedure based on the current at the grid-connected port and whether the inverter is photovoltaic-limited, the charging pile is specifically configured to: when the charging pile starts charging, start charging if the inverter is photovoltaic-limited, and start charging if the inverter is not photovoltaic-limited and the current at the grid-connected port is greater than or equal to a preset first charging current; and in a process of charging by the charging pile, if the inverter is photovoltaic-limited, increase the charging current until the inverter is not photovoltaic-limited; reduce the charging current if the inverter is not photovoltaic-limited and electricity is purchased from the power grid through the grid-connected port; and suspend charging if the charging current is reduced to the first charging current and duration of purchasing electricity from the power grid through the grid-connected port meets a preset third time threshold.

Optionally, when the charging pile suspends charging, the charging pile is further configured to: start charging if the inverter is photovoltaic-limited; and start charging if the inverter is not photovoltaic-limited, the current at the grid-connected port is greater than or equal to the first charging current, and duration of selling electricity to the power grid through the grid-connected port meets a preset second time threshold.

Optionally, when the charging mode is the economy mode, the charging pile is further configured to: set super-peak hours, peak hours, shoulder hours, and off-peak hours using software or directly through local operations, and perform corresponding charging procedures based on the current at the grid-connected port and the preset charging current during the super-peak hours, the peak hours, the shoulder hours, and the off-peak hours.

Optionally, the preset charging current includes a first charging current, a second charging current, a third charging current, and a fourth charging current, and the second charging current < the first charging current < the third charging current < the fourth charging current, where when the charging pile operates during the super-peak hours, when performing the corresponding charging procedure based on the current at the grid-connected port and the preset charging current, the charging pile is specifically configured to: suspend charging if the current at the grid-connected port is less than the first charging current; and start charging if the current at the grid-connected port is greater than or equal to the first charging current, and perform charging using the current at the grid-connected port.

Optionally, the preset charging current includes a first charging current, a second charging current, a third charging current, and a fourth charging current, and the second charging current < the first charging current < the third charging current < the fourth charging current, where when the charging pile operates during the peak hours, when performing the corresponding charging procedure based on the current at the grid-connected port and the preset charging current, the charging pile is specifically configured to: suspend charging if the current at the grid-connected port is less than the second charging current; perform charging using the first charging current if the current at the grid-connected port is greater than or equal to the second charging current and less than or equal to the first charging current; and perform charging using the current at the grid-connected port if the current at the grid-connected port is greater than the first charging current.

Optionally, the preset charging current includes a first charging current, a second charging current, a third charging current, and a fourth charging current, and the second charging current < the first charging current < the third charging current < the fourth charging current, where when the charging pile operates during the shoulder hours, when performing the corresponding charging procedure based on the current at the grid-connected port and the preset charging current, the charging pile is specifically configured to: perform charging using the third charging current if the current at the grid-connected port is less than or equal to the third charging current; and perform charging using the current at the grid-connected port if the current at the grid-connected port is greater than the third charging current.

Optionally, the preset charging current includes a first charging current, a second charging current, a third charging current, and a fourth charging current, and the second charging current < the first charging current < the third charging current < the fourth charging current, where when the charging pile operates during the off-peak hours, when performing the corresponding charging procedure based on the current at the grid-connected port and the preset charging current, the charging pile is specifically configured to: perform charging using the fourth charging current if the current at the grid-connected port is less than or equal to the fourth charging current; and perform charging using the current at the grid-connected port if the current at the grid-connected port is greater than the fourth charging current.

According to another aspect of the embodiments of the present application, a charging control method based on the foregoing charging control system for a charging pile is provided, including: determining a charging mode of a charging pile, where the charging mode includes any one of a green power mode and an economy mode; when the charging mode is the green power mode, charging a device to be charged using power generated by a photovoltaic system, and adjusting a charging current of the charging pile based on a current at a grid-connected port of an inverter until a power at the grid-connected port reaches zero; and when the charging mode is the economy mode, purchasing electricity from a utility power supply for supplementation when power generated by the photovoltaic system is insufficient, and charging the device to be charged using a preset charging current; and when power generated by the photovoltaic system is sufficient, adjusting the charging current of the charging pile based on the current at the grid-connected port until the power at the grid-connected port reaches zero.

Optionally, when the charging mode is the green power mode and no communication connection is established between the charging pile and the inverter, the charging control method further includes: acquiring the current at the grid-connected port using an external current sensor, and performing a corresponding charging procedure based on the current at the grid-connected port; and when the charging mode is the green power mode and a communication connection is established between the charging pile and the inverter, the charging control method further includes: performing a corresponding charging procedure based on the current at the grid-connected port and whether the inverter is photovoltaic-limited.

Optionally, when the charging mode is the economy mode, the charging control method further includes: setting super-peak hours, peak hours, shoulder hours, and off-peak hours using software or directly through the charging pile, and performing corresponding charging procedures based on the current at the grid-connected port and the preset charging current during the super-peak hours, the peak hours, the shoulder hours, and the off-peak hours.

In the embodiments of the present application, the system monitors the current and the power at the grid-connected port in real time using the charging pile, and automatically adjusts the charging current, to ensure that the power generated by the photovoltaic system is preferentially used while the charging requirement is met and the insufficient part is supplemented from the utility power supply when necessary. Specifically, the present application provides two charging modes: the green power mode and the economy mode. In the green power mode, the charging pile fully relies on power generated by the photovoltaic system to charge an electric vehicle, and the charging current is dynamically adjusted to ensure that the power at the grid-connected port is zero, that is, no additional power is obtained from the utility power supply. In this manner, dependency on the utility power supply is minimized, and green charging is implemented. In the economy mode, the charging pile first attempts to perform charging using power generated by the photovoltaic system. When the power generated by the photovoltaic system is insufficient to meet a charging requirement, the charging pile automatically obtains additional power from the utility power supply to cover the deficit. In this process, the system still keeps the power at the grid-connected port close to zero as much as possible to reduce unnecessary electricity expenses, thereby resolving a technical problem in the related art that a charging pile of a conventional electric vehicle relies on a utility power supply directly and fails to effectively use renewable energy, leading to a heavy load to a power grid during peak hours and a waste of resources, and achieving the technical effects of maximizing the utilization of renewable resources, reducing charging costs for users, and also reducing the load on the power grid.

### BRIEF DESCRIPTION OF THE DRAWINGS

To describe the technical solutions of the embodiments of the present application or the prior art more clearly, the following briefly describes the accompanying drawings required for describing the embodiments or the prior art. Apparently, the accompanying drawings in the following description show only some embodiments of the present application, and a person of ordinary skill in the art may still derive other drawings from these embodiments without creative efforts.
FIG. 1 is a schematic diagram of a charging control system for a charging pile according to an embodiment of the present application;
FIG. 2 is a flowchart of a PID algorithm according to an embodiment of the present application; and
FIG. 3 is a flowchart of a charging control method applied to a charging control system for a charging pile according to an embodiment of the present application.

### DETAILED DESCRIPTION

The following describes embodiments of the present application in detail with reference to the accompanying drawings. Although some embodiments of the present application are shown in the accompanying drawings, it should be understood that the embodiments of the present application may be implemented in various forms, and should not be construed as being limited to the embodiments described herein. On the contrary, these embodiments are provided such that the embodiments of the present application will be thoroughly and completely understood. It should be understood that the accompanying drawings and embodiments of the present application are merely used as examples, but are not intended to limit the scope of protection of the present application.

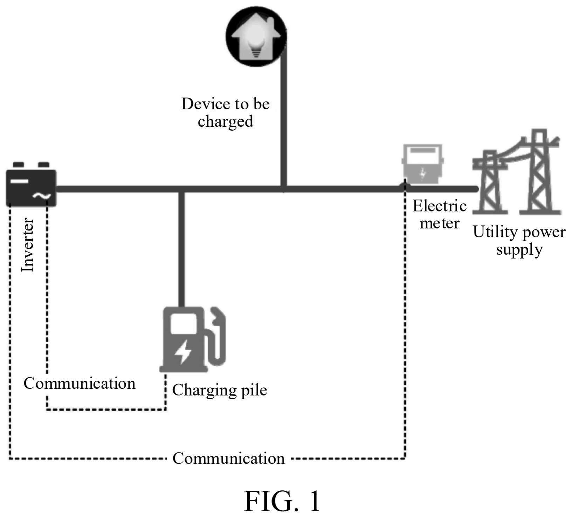

According to an aspect of the embodiments of the present application, a charging control system for a charging pile is provided. FIG. 1 is a schematic diagram of a charging control system for a charging pile according to an embodiment of the present application. As shown in FIG. 1, the system includes a utility power supply, an inverter, and a charging pile.

The utility power supply is configured to provide alternating current through a power grid.

The inverter is configured to convert direct current generated by a photovoltaic system into alternating current.

The charging pile is connected to the utility power supply and the inverter. The charging pile is configured to: obtain a current and a power at a grid-connected port of the inverter, identify a charging mode thereof when a device to be charged is connected to the charging pile, and charge the device to be charged according to the charging mode.

The charging mode includes any one of a green power mode (green) and an economy mode (eco). When the charging mode is the green power mode, the charging pile charges the device to be charged using power generated by the photovoltaic system, and adjusts a charging current based on the current at the grid-connected port until the power at the grid-connected port reaches zero. When the charging mode is the economy mode, the charging pile purchases electricity from the utility power supply for supplementation when power generated by the photovoltaic system is insufficient, and performs charging using a preset charging current; and when power generated by the photovoltaic system is sufficient, adjusts the charging current based on the current at the grid-connected port until the power at the grid-connected port reaches zero.

In view of the foregoing problem, the present application provides a charging control system for a charging pile. The system monitors the current and the power at the grid-connected port in real time using the charging pile, and automatically adjusts the charging current, to ensure that the power generated by the photovoltaic system is preferentially used while the charging requirement is met and the insufficient part is supplemented from the utility power supply when necessary. Specifically, the present application provides two charging modes: the green power mode and the economy mode.

In the green power mode, the charging pile fully relies on power generated by the photovoltaic system to charge the device to be charged, and the charging current is dynamically adjusted to ensure that the power at the grid-connected port is zero, that is, no additional power is obtained from the utility power supply. In this manner, dependency on the utility power supply is minimized, and green charging is implemented.

In the economy mode, the charging pile first attempts to perform charging using power generated by the photovoltaic system. When the power generated by the photovoltaic system is insufficient to meet a charging requirement, the charging pile automatically obtains additional power from the utility power supply to cover the deficit. In this process, the system still keeps the power at the grid-connected port close to zero as much as possible to reduce unnecessary electricity expenses.

In the embodiments of the present application, the system effectively integrates the photovoltaic system and the charging pile, thereby maximizing the utilization of renewable resources, reducing charging costs for users, and also reducing the load on the power grid. In addition, through flexible switching between different charging modes, the present application can adapt to different charging requirement scenarios, which not only ensures charging efficiency of users, but also facilitates environmental protection and sustainable development.

The device to be charged includes, but is not limited to, an electric vehicle, an electric truck, and another device that is driven using electric energy.

Optionally, the green power mode is applicable to a scenario in which a vehicle owner has no need to use a vehicle. In this case, the charging pile performs charging solely in the green power mode (electric energy generated by the photovoltaic system) until the vehicle is fully charged. As a specific implementation, the charging pile operates in the pure green power mode. The charging pile and the inverter establish communication via a bus (for example, RS485) or a wireless connection. The inverter acquires the current and the power at the grid-connected port using an electric meter, and sends an acquisition result to the charging pile after processing. The charging pile adjusts the charging current in real time based on the current at the grid-connected port using a Proportional-Integral-Derivative (PID) algorithm, to adjust the power at the grid-connected port to zero. In the PID algorithm, the power at the grid-connected port is used as an input error, zero is used as a target value of the power at the grid-connected port, and an integral separation method is used for calculation.

Optionally, the economy mode is applicable to a scenario in which the vehicle owner has a need to use the vehicle but is not in an emergency. In this case, the charging pile can meet the need by performing charging using a particular power. As a specific implementation, the charging pile operates in the economy mode. In this mode, a user needs to set the charging current. The charging pile and the inverter establish communication via a bus or a wireless connection. The inverter acquires the current and the power at the grid-connected port using an electric meter, and sends an acquisition result to the charging pile. When power generated by the photovoltaic system is insufficient and as a result electricity is purchased from the utility power supply, the charging pile performs charging using the charging current set by the user to ensure that the vehicle can be charged at least using the charging current set by the user. When photovoltaic system generates sufficient power and electricity is sold to the power grid through the grid-connected port, the charging pile adjusts the charging current in real time based on an electricity sale current at the grid-connected port using the PID algorithm, to adjust the power at the grid-connected port to zero. In the PID algorithm, the power at the grid-connected port is used as an input error, zero is used as a target value of the power at the grid-connected port, and an integral separation method is used for calculation.

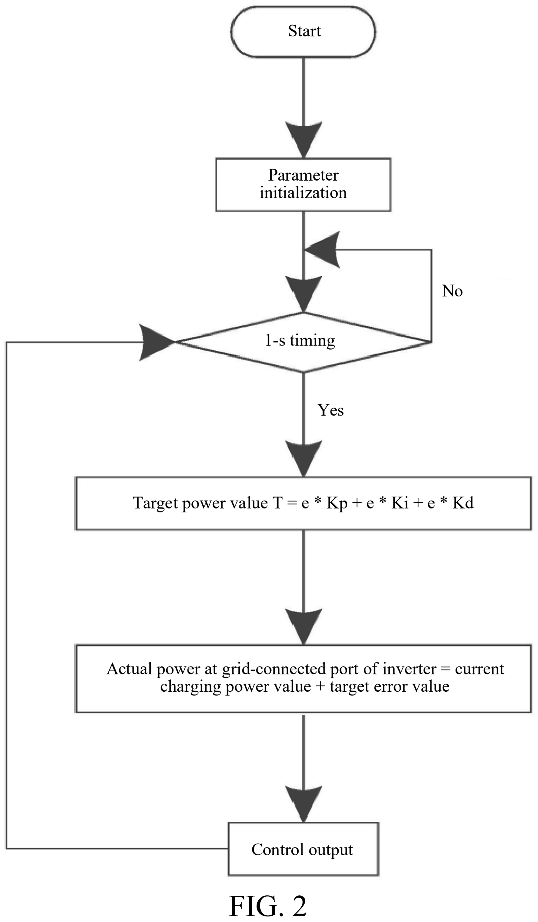

In conventional PID algorithm control, an integral term is introduced mainly to eliminate a steady-state error and improve control precision. However, during startup, shutdown, or significant increases or decreases in setpoints, significant deviations in system output within a short time lead to integral windup in the PID algorithm, causing the control output to exceed the limiting control output corresponding to the maximum allowable operating range of an actuator, thereby inducing significant overshoot and even oscillations, which is absolutely not allowed. To overcome this issue, the concept of integral separation is introduced. The basic idea thereof is to disable the integral action when a deviation between a controlled variable and a setpoint is large, and to enable integral control when the controlled variable approaches the setpoint, thereby eliminating a steady-state error and improving precision. FIG. 2 is a flowchart of a PID algorithm according to an embodiment of the present application. As shown in FIG. 2, a procedure of the PID algorithm includes the following content. Specifically, target parameters are initialized. For example, a target power at the grid-connected port is set to y, an actual power at the grid-connected port is r, and a target error value is e = y - r. Timing (for example, a time threshold is set to 1 s) is used to determine a control calculation occasion. For example, when the elapsed time does not reach 1 s, control calculation is not performed, and when the elapsed time reaches 1 s, control calculation is performed, to calculate the value of the target power (T = e * Kp + e * Ki + e * Kd, where Kp is a proportional coefficient, Ki is an integral coefficient, and Kd is a differential coefficient) and the value of the actual power (which is equal to a current charging power value + the target error value) at the grid-connected port, and perform control output.

As an optional embodiment, when the charging mode is the green power mode, when no communication connection is established between the charging pile and the inverter, the charging pile may further acquire the current at the grid-connected port using an external current transformer, and perform a corresponding charging procedure based on the current at the grid-connected port.

The charging pile is a single-phase alternating-current charging pile. No communication connection is established between the single-phase alternating-current charging pile and the non-zero output inverter (the inverter is allowed to sell electricity to the power grid). When independently working, the charging pile may be externally connected to the current transformer. The current transformer is connected to a grid-connected port (also referred to as a grid-tie port), and is configured to obtain the current at the grid-connected port.

It should be noted that the charging pile is responsible for charging the device to be charged. The current transformer is externally connected to the grid-connected port, and is configured to acquire the current at the grid-connected port. The grid-connected port is a grid-tie port, and is an interface for connecting to the power grid.

In the embodiments of the present application, in the green power mode, when no communication connection is established between the charging pile and the inverter, a method of acquiring the current at the grid-connected port using the external current transformer and dynamically adjusting a charging strategy based on the current at the grid-connected port is adopted. The method can maximize the utilization of power generated by the photovoltaic system, thereby achieving real green charging.

Further, when the charging pile acquires the current at the grid-connected port using the external current transformer and performs the corresponding charging procedure based on the current at the grid-connected port, the following method is used for implementation. Specifically, when the charging pile starts charging, it is determined whether the current at the grid-connected port is greater than or equal to a preset first charging current. The charging pile starts charging if the current at the grid-connected port is greater than or equal to the first charging current. The charging pile suspends charging if the current at the grid-connected port is less than the first charging current. The charging pile adjusts the charging current in real time based on the current at the grid-connected port in a process of charging by the charging pile. The charging pile increases the charging current when electricity is sold to the power grid through the grid-connected port. The charging pile reduces the charging current when electricity is purchased from the power grid through the grid-connected port. The charging pile suspends charging if the charging current is reduced to the first charging current and duration of purchasing electricity from the power grid through the grid-connected port meets a preset first time threshold.

Optionally, the first time threshold and the first charging current may be flexibly set according to a requirement of an application scenario. For example, the first charging current includes, but is not limited to, 6 A. The first time threshold includes, but is not limited to, 30 s, and 1 min.

An example in which the first charging current is 6 A is used for description below.

Optionally, when the charging pile starts charging, the charging pile determines whether the current at the grid-connected port is greater than or equal to 6 A. If the current at the grid-connected port is greater than or equal to 6 A, the charging pile starts charging with a 10% duty cycle. If the current at the grid-connected port is less than 6 A, the charging pile suspends charging.

Optionally, the charging pile adjusts the magnitude of the charging current in real time based on the current at the grid-connected port in a process of charging by the charging pile. The charging pile increases the charging current when electricity is sold to the power grid through the grid-connected port, and the charging pile reduces the charging current when electricity is purchased from the power grid through the grid-connected port. If the charging current is reduced to 6 A and electricity is still purchased from the power grid through the grid-connected port for one minute, the charging pile suspends charging.

Further, when the charging pile suspends charging, the charging pile detects, in real time, whether the current at the grid-connected port is greater than or equal to the first charging current. The charging pile starts charging if the current at the grid-connected port is greater than or equal to the first charging current and duration of selling electricity to the power grid through the grid-connected port meets a preset second time threshold.

The second time threshold may be flexibly set according to a requirement of an application scenario. For example, the second time threshold includes, but is not limited to, 30 s, and 1 min.

Optionally, when the charging pile suspends charging, the charging pile detects, in real time, whether the current at the grid-connected port is greater than or equal to 6 A. If the current at the grid-connected port is greater than or equal to 6 A and electricity is still sold to the power grid through the grid-connected port for one minute, the charging pile starts charging.

In the embodiments of the present application, the current at the grid-connected port is monitored in real time using the external current transformer, thereby avoiding a waste of power from the photovoltaic system. When the power from the photovoltaic system is sufficient, the charging pile increases the charging current to make full use of the power from the photovoltaic system. When the power from the photovoltaic system is insufficient, the charging pile reduces the charging current until the charging stops, thereby reducing power purchased from the power grid.

The charging pile can quickly respond to a change in a photovoltaic status by acquiring the current at the grid-connected port in real time using the external current transformer, thereby achieving intelligent charging management. Such intelligent management not only improves the charging efficiency, but also prolongs the service life of the battery of the device to be charged. The charging pile can automatically adjust the charging strategy based on the current at the grid-connected port without manual intervention by a user, thereby providing more convenient and efficient charging experience. The functions of real-time monitoring and dynamic adjustment ensure the stability and reliability of a charging process, and reduce a waiting time and charging costs for users.

As an optional embodiment, when the charging mode is the green power mode, when a communication connection is established between the charging pile and the inverter, the charging pile communicates with the inverter via a bus, and performs a corresponding charging procedure based on the current at the grid-connected port and whether the inverter is photovoltaic-limited.

Optionally, a communication connection is established between the single-phase alternating-current charging pile and the inverter. During coordinated operation, the charging pile communicates with the inverter via a bus (for example, RS485), and the inverter sends information about the current at the grid-connected port to the charging pile. It should be noted that "photovoltaic-limited" is a state in which the inverter is capable of generating power but is restricted from generating excessive amounts (is not allowed to sell electricity to the power grid or is allowed to sell a small amount of electricity to the power grid).

It should be noted that the charging pile is responsible for charging the device to be charged. The inverter is configured to convert direct current generated by the photovoltaic system into alternating current, and simultaneously control the magnitude and direction of the power at the grid-connected port. The RS485 communication interface or wireless communication is a communication channel disposed between the charging pile and the inverter, and is configured to transmit a photovoltaic status and a charging control instruction in real time.

In the embodiments of the present application, in the green power mode, the charging pile and the inverter perform real-time data exchange through the RS485 communication interface, and the charging pile dynamically adjusts the charging strategy based on the current at the grid-connected port and whether the inverter is photovoltaic-limited.

Further, when the charging pile communicates with the inverter via the bus and performs the corresponding charging procedure based on the current at the grid-connected port and whether the inverter is photovoltaic-limited, the following method is used for implementation. Specifically, when the charging pile starts charging, whether to start charging is determined based on whether the inverter is photovoltaic-limited. The charging pile starts charging if the inverter is photovoltaic-limited. The charging pile starts charging if the inverter is not photovoltaic-limited and the current at the grid-connected port is greater than or equal to a preset first charging current. In a process of charging by the charging pile, if the inverter is photovoltaic-limited, the charging pile increases the charging current until the inverter is not photovoltaic-limited. The charging pile reduces the charging current if the inverter is not photovoltaic-limited and electricity is purchased from the power grid through the grid-connected port. The charging pile suspends charging if the charging current is reduced to the first charging current and duration of purchasing electricity from the power grid through the grid-connected port meets a preset third time threshold.

The third time threshold may be flexibly set according to a requirement of an application scenario. For example, the third time threshold includes, but is not limited to, 30 s, and 1 min.

Optionally, when the charging pile starts charging, the charging pile determines, based on whether the inverter is photovoltaic-limited, whether charging can be started. If the inverter is photovoltaic-limited, the charging pile starts charging. When the inverter is not photovoltaic-limited, the charging pile may further determine, in combination with the current at the grid-connected port, whether charging can be started. That is, if the inverter is not photovoltaic-limited and the current at the grid-connected port is greater than or equal to the preset first charging current, the charging pile starts charging. In all other cases, the charging pile suspends charging.

Optionally, during the stage in which the charging pile starts charging, when the inverter is photovoltaic-limited, because the electricity sale current at a grid-connected port is restricted, it cannot be accurately known whether the electricity sale current at the grid-connected port is equal to an actual power generation current of the inverter at a current moment. It may be understood that when the inverter is photovoltaic-limited, the charging pile starts charging regardless of the magnitude of the electricity sale current at the grid-connected port. If an electricity purchase current is detected at the grid-connected port during startup and the duration of purchasing electricity meets the preset third time threshold, the charging pile suspends charging.

Specifically, the charging pile starts charging when the inverter is photovoltaic-limited and the electricity sale current at the grid-connected port is less than the first charging current. In this case, the charging pile performs charging using the first charging current. If an electricity purchase current is detected at the grid-connected port during startup and the duration of the purchasing electricity meets the preset third time threshold, the charging pile suspends charging. When the inverter is photovoltaic-limited and the electricity sale current at the grid-connected port is greater than the first charging current, the charging pile starts charging. In this case, the actual power generation current of the inverter is definitely greater than the first charging current, and the charging pile performs charging using an actual current.

Optionally, in a process of charging by the charging pile, if the inverter is photovoltaic-limited, the charging pile increases the charging current until the inverter is not photovoltaic-limited. If the inverter is not photovoltaic-limited and electricity is purchased from the power grid through the grid-connected port, the charging pile reduces the charging current. If the charging current is reduced to 6 A and electricity is still purchased from the power grid through the grid-connected port for one minute, the charging pile suspends charging.

Further, when the charging pile suspends charging, the charging pile starts charging if the inverter is photovoltaic-limited. The charging pile starts charging if the inverter is not photovoltaic-limited, the current at the grid-connected port is greater than or equal to the first charging current, and duration of selling electricity to the power grid through the grid-connected port meets a preset second time threshold.

The second time threshold may be flexibly set according to a requirement of an application scenario. For example, the second time threshold includes, but is not limited to, 30 s, and 1 min.

Optionally, when the charging pile suspends charging, the charging pile starts charging if the inverter is photovoltaic-limited. If the inverter is not photovoltaic-limited, the charging pile detects, in real time, whether the current at the grid-connected port is greater than or equal to 6 A. If the current at the grid-connected port is greater than or equal to 6 A and electricity is still sold to the power grid through the grid-connected port for one minute, the charging pile starts charging.

In the embodiments of the present application, by monitoring the photovoltaic status of the inverter in real time, the charging pile can preferentially perform charging using power from the photovoltaic system when the inverter is photovoltaic-limited, thereby avoiding a waste of the power from the photovoltaic system.

As an optional embodiment, when the charging mode is the economy mode, the charging pile sets super-peak hours, peak hours, shoulder hours, and off-peak hours using software or directly through local operations, and performs corresponding charging procedures based on the current at the grid-connected port and the preset charging current during the super-peak hours, the peak hours, the shoulder hours, and the off-peak hours.

In the embodiments of the present application, the super-peak hours, peak hours, shoulder hours, and off-peak hours are preset using software or directly using the charging pile, and the charging current of the charging pile is dynamically adjusted based on the values of the current at the grid-connected port and the preset charging current in different time periods. The method can maximize the utilization of renewable energy, reduce the pressure on the power grid during peak hours, and reduce charging costs for users.

Further, the preset charging current includes a first charging current, a second charging current, a third charging current, and a fourth charging current, and the second charging current < the first charging current < the third charging current < the fourth charging current.

When the charging pile sets the super-peak hours, the peak hours, the shoulder hours, and the off-peak hours using software or directly through local operations, and performs the corresponding charging procedures based on the current at the grid-connected port and the preset charging current, the following method is used for implementation. Specifically, when the charging pile operates during the super-peak hours, the charging pile suspends charging if the current at the grid-connected port is less than the first charging current, and the charging pile starts charging if the current at the grid-connected port is greater than or equal to the first charging current, and performs charging using the current at the grid-connected port. When the charging pile operates during the peak hours, the charging pile suspends charging if the current at the grid-connected port is less than the second charging current. The charging pile performs charging using the first charging current if the current at the grid-connected port is greater than or equal to the second charging current and less than or equal to the first charging current. The charging pile performs charging using the current at the grid-connected port if the current at the grid-connected port is greater than the first charging current. When the charging pile operates during the shoulder hours, the charging pile performs charging using the third charging current if the current at the grid-connected port is less than or equal to the third charging current. The charging pile performs charging using the current at the grid-connected port if the current at the grid-connected port is greater than the third charging current. When the charging pile operates during the off-peak hours, the charging pile performs charging using the fourth charging current if the current at the grid-connected port is less than or equal to the fourth charging current. The charging pile performs charging using the current at the grid-connected port if the current at the grid-connected port is greater than the fourth charging current.

The preset charging current may be set according to a requirement of an application scenario. For example, the first charging current includes, but is not limited to, 6 A, the second charging current includes, but is not limited to, 3 A, the third charging current includes, but is not limited to, 10 A, and the fourth charging current includes, but is not limited to, 20 A.

Descriptions are provided below by using an example in which the first charging current is 6 A, the second charging current is 3 A, the third charging current is 10 A, and the fourth charging current is 20 A.

Optionally, when the charging pile operates during the super-peak hours, when the current at the grid-connected port is less than 6 A, the charging pile suspends charging. When the current at the grid-connected port of the charging pile is greater than or equal to 6 A, the charging pile starts charging, and adjusts the charging current in real time based on the magnitude of an actual current at the grid-connected port to perform charging. For example, when the current at the grid-connected port is 10 A, the charging pile performs charging using 10 A.

Optionally, when the charging pile operates during the peak hours, when the current at the grid-connected port is less than 3 A, the charging pile suspends charging. When the current at the grid-connected port is greater than or equal to 3 A and less than or equal to 6 A, the charging pile performs charging using 6 A. When the current at the grid-connected port is greater than 6 A, the charging pile performs charging using an actual current at the grid-connected port. For example, when the current at the grid-connected port is 2 A, the charging pile suspends charging. When the current at the grid-connected port is 4 A, the charging pile performs charging using 6 A. When the current at the grid-connected port is 10 A, the charging pile performs charging using 10 A.

Optionally, when the charging pile operates during the shoulder hours, when the current at the grid-connected port is less than or equal to 10 A, the charging pile performs charging using 10 A. When the current at the grid-connected port is greater than 10 A, the charging pile performs charging using an actual current at the grid-connected port.

Optionally, when the charging pile operates during the off-peak hours, when the current at the grid-connected port is less than or equal to 20 A, the charging pile performs charging using 20 A. When the current at the grid-connected port is greater than 20 A, the charging pile performs charging using an actual current at the grid-connected port.

It should be understood that all functions implemented by the foregoing charging pile are implemented by a built-in chip or another type of computing device having a data processing function.

In the embodiments of the present application, the charging current is dynamically adjusted, and the current at the grid-connected port is preferentially used, thereby effectively improving the utilization of renewable energy and reducing dependency on non-renewable resources. In the economy mode, the charging pile can automatically select an optimal charging strategy based on the current at the grid-connected port and different time periods of power grid electricity price, to help users avoid charging during a peak period of electricity price, thereby significantly reducing charging costs. Especially in super-peak hours and shoulder hours, the charging pile can reduce dependency on the power grid through intelligent scheduling, to help balance a load on the power grid and avoid an overload of the power grid. Users may set and monitor a charging process using software or directly using the charging pile, to enjoy a more convenient and efficient charging service.

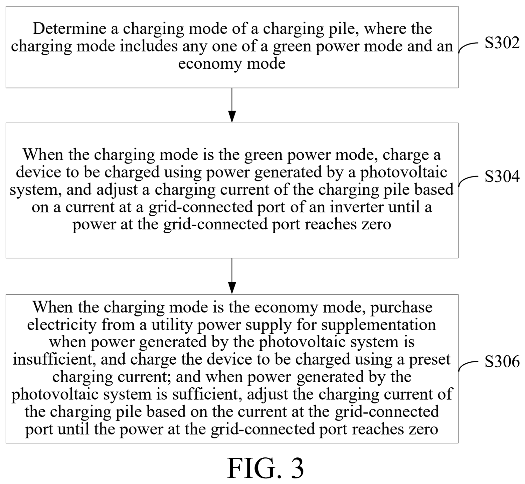

According to another aspect of the embodiments of the present application, a charging control method based on the foregoing charging control system for a charging pile is provided. FIG. 3 is a flowchart of a charging control method applied to a charging control system for a charging pile according to an embodiment of the present application. The charging control method is performed by a built-in chip of a charging pile or another type of computing device having a data processing function. As shown in FIG. 3, the method includes the following steps.

Step S302: Determine a charging mode of a charging pile, where the charging mode includes any one of a green power mode and an economy mode.

Step S304: When the charging mode is the green power mode, charge a device to be charged using power generated by a photovoltaic system, and adjust a charging current of the charging pile based on a current at a grid-connected port of an inverter until a power at the grid-connected port reaches zero.

Step S306: When the charging mode is the economy mode, purchase electricity from a utility power supply for supplementation when power generated by the photovoltaic system is insufficient, and charge the device to be charged using a preset charging current; and when power generated by the photovoltaic system is sufficient, adjust the charging current of the charging pile based on the current at the grid-connected port until the power at the grid-connected port reaches zero.

In the green power mode, the charging pile fully relies on power generated by the photovoltaic system to perform charging, and the charging current is adjusted in real time to ensure that the power at the grid-connected port is zero, that is, no additional power is obtained from the utility power supply. Power generated by the photovoltaic system is used to perform charging, and the charging current of the charging pile is adjusted in real time to ensure that the power at the grid-connected port is zero. If the photovoltaic system generates sufficient power, the charging pile performs charging at full power. If the power generated by the photovoltaic system is insufficient, the charging pile reduces the charging current, to avoid obtaining additional power from the utility power supply.

In the economy mode, the charging pile first attempts to perform charging using the power generated by the photovoltaic system, and purchases electricity from the utility power supply for supplementation when the power generated by the photovoltaic system is insufficient. The charging pile adjusts the charging current in real time when the power generated by the photovoltaic system is sufficient until the power at the grid-connected port reaches zero. If power generated by the photovoltaic system is insufficient, the charging pile purchases electricity from the utility power supply for supplementation, and performs charging using the preset charging current. If the photovoltaic system generates sufficient power, the charging pile adjusts the charging current in real time, so that the power at the grid-connected port reaches zero, that is, the power obtained from the utility power supply is reduced as much as possible.

In the embodiments of the present application, in the green power mode, when power generated by the photovoltaic system is sufficient, the charging pile can preferentially use this part of power for charging, thereby avoiding a waste of the power from the photovoltaic system. In the economy mode, the charging pile preferentially uses the power from the photovoltaic system, and purchases electricity from the utility power supply only when the power from the photovoltaic system is insufficient, thereby further improving the utilization of the power from the photovoltaic system. It is ensured by adjusting the charging current in real time that the power at the grid-connected port is zero, to avoid obtaining additional power from the power grid during peak hours, thereby reducing a load on the power grid. Particularly, in the green power mode, the charging pile does not rely on the utility power supply at all, thereby further reducing the dependency on the power grid. The costs of purchasing power from the utility power supply are reduced by preferentially using the power from the photovoltaic system, thereby reducing charging expenditure for users. In the economy mode, the charging pile can dynamically adjust a charging strategy based on a real-time status of the power from the photovoltaic system, thereby further optimizing the charging costs. A user may select different charging modes to perform charging according to a requirement and an actual status of the photovoltaic system, thereby providing more flexible and convenient charging experience. The functions of real-time monitoring and dynamic adjustment ensure the stability and reliability of a charging process, and reduce a waiting time and charging costs for users.

Further, the charging control method further includes: when the charging mode is the green power mode and no communication connection is established between the charging pile and the inverter, acquiring the current at the grid-connected port using an external current sensor, and performing a corresponding charging procedure based on the current at the grid-connected port.

Further, the charging control method further includes: when the charging mode is the green power mode and a communication connection is established between the charging pile and the inverter (for example, the charging pile communicates with the inverter via a bus), performing a corresponding charging procedure based on the current at the grid-connected port and whether the inverter is photovoltaic-limited.

Further, the charging control method further includes: when the charging mode is the economy mode, setting super-peak hours, peak hours, shoulder hours, and off-peak hours using software or directly through the charging pile, and performing corresponding charging procedures based on the current at the grid-connected port and the preset charging current during the super-peak hours, the peak hours, the shoulder hours, and the off-peak hours.

It should be noted that the term "include" and variations thereof are used in the embodiments of the present application as an open inclusion, that is, "including, but not limited to." The term "based on" means "based, at least in part, on." The term "an embodiment" means "at least one embodiment." The term "another embodiment" means "at least one additional embodiment." The term "some embodiments" means "at least some embodiments." The modifications of "one" and "more than one" referred to in the embodiments of the present application are illustrative rather than limiting, and it should be understood by those skilled in the art to mean "one or more" unless the context clearly indicates otherwise.

The individual steps documented in the method implementations provided in the embodiments of the present application may be performed in a different order, and/or in parallel. In addition, the method implementations may include additional steps and/or omit the steps illustrated. The scope of protection of the present application is not limited in this regard.

The term "embodiment" in this specification means that a specific feature, structure, or characteristic described in connection with the embodiment can be included in at least one embodiment of the present application. The phrase shown in various locations in the specification may not necessarily refer to a same embodiment, and is not an independent or alternative embodiment exclusive from another embodiment. The embodiments of this specification are all described in a relevant manner, for same or similar parts in the embodiments, refer to these embodiments. Especially, apparatus, device, and system embodiments are basically similar to a method embodiment, and therefore is described briefly; for related parts, refer to partial descriptions in the method embodiment.

The above embodiments are only several implementations of the present application, which are described in detail, without limitation to the scope of patent protection. It should be noted that for persons of ordinary skill in the art, several variations and improvements may further be made without departing from the concept of the present application. These variations and improvements should also be deemed as falling within the scope of protection of the present application. Therefore, the scope of protection of the present application is subject to the claims.

## Claims

1. A charging control system for a charging pile, comprising:
a utility power supply, configured to provide alternating current through a power grid;
an inverter, configured to convert direct current generated by a photovoltaic system into alternating current; and
a charging pile, connected to the utility power supply and the inverter, and configured to: obtain a current and a power at a grid-connected port of the inverter, identify a charging mode when a device to be charged is connected to the charging pile, and charge the device to be charged according to the charging mode, wherein
the charging mode comprises any one of a green power mode and an economy mode, and
when the charging mode is the green power mode, the charging pile, when charging the device to be charged according to the charging mode, is specifically configured to: charge the device to be charged using power generated by the photovoltaic system, and adjust a charging current based on the current at the grid-connected port until the power at the grid-connected port reaches zero; and
when the charging mode is the economy mode, the charging pile, when charging the device to be charged according to the charging mode, is specifically configured to: purchase electricity from the utility power supply for supplementation when power generated by the photovoltaic system is insufficient, and charge the device to be charged using a preset charging current; and when power generated by the photovoltaic system is sufficient, adjust the charging current based on the current at the grid-connected port until the power at the grid-connected port reaches zero.

2. The charging control system for a charging pile according to claim 1, wherein when the charging mode is the green power mode and no communication connection is established between the charging pile and the inverter, the charging pile is further configured to: acquire the current at the grid-connected port using an external current sensor, and perform a corresponding charging procedure based on the current at the grid-connected port.

3. The charging control system for a charging pile according to claim 2, wherein when performing the corresponding charging procedure based on the current at the grid-connected port, the charging pile is specifically configured to:
determine, when the charging pile starts charging, whether the current at the grid-connected port is greater than or equal to a preset first charging current, start charging if the current at the grid-connected port is greater than or equal to the first charging current, and suspend charging if the current at the grid-connected port is less than the first charging current; and
adjust the charging current in real time based on the current at the grid-connected port in a process of charging by the charging pile; increase the charging current when electricity is sold to the power grid through the grid-connected port; reduce the charging current when electricity is purchased from the power grid through the grid-connected port; and suspend charging if the charging current is reduced to the first charging current and duration of purchasing electricity from the power grid through the grid-connected port meets a preset first time threshold.

4. The charging control system for a charging pile according to claim 3, wherein when the charging pile suspends charging, the charging pile is further configured to:
detect, in real time, whether the current at the grid-connected port is greater than or equal to the first charging current; and
start charging if the current at the grid-connected port is greater than or equal to the first charging current and duration of selling electricity to the power grid through the grid-connected port meets a preset second time threshold.

5. The charging control system for a charging pile according to claim 1, wherein when the charging mode is the green power mode and a communication connection is established between the charging pile and the inverter, the charging pile is further configured to: communicate with the inverter via a bus, and perform a corresponding charging procedure based on the current at the grid-connected port and whether the inverter is photovoltaic-limited.

6. The charging control system for a charging pile according to claim 5, wherein when performing the corresponding charging procedure based on the current at the grid-connected port and whether the inverter is photovoltaic-limited, the charging pile is specifically configured to:
when the charging pile starts charging, start charging if the inverter is photovoltaic-limited, and start charging if the inverter is not photovoltaic-limited and the current at the grid-connected port is greater than or equal to a preset first charging current; and
in a process of charging by the charging pile, if the inverter is photovoltaic-limited, increase the charging current until the inverter is not photovoltaic-limited; reduce the charging current if the inverter is not photovoltaic-limited and electricity is purchased from the power grid through the grid-connected port; and suspend charging if the charging current is reduced to the first charging current and duration of purchasing electricity from the power grid through the grid-connected port meets a preset third time threshold.

7. The charging control system for a charging pile according to claim 6, wherein when the charging pile suspends charging, the charging pile is further configured to:
start charging if the inverter is photovoltaic-limited; and
start charging if the inverter is not photovoltaic-limited, the current at the grid-connected port is greater than or equal to the first charging current, and duration of selling electricity to the power grid through the grid-connected port meets a preset second time threshold.

8. The charging control system for a charging pile according to claim 1, wherein when the charging mode is the economy mode, the charging pile is further configured to: set super-peak hours, peak hours, shoulder hours, and off-peak hours using software or directly through local operations, and perform corresponding charging procedures based on the current at the grid-connected port and the preset charging current during the super-peak hours, the peak hours, the shoulder hours, and the off-peak hours.

9. The charging control system for a charging pile according to claim 8, wherein the preset charging current comprises a first charging current, a second charging current, a third charging current, and a fourth charging current, and the second charging current < the first charging current < the third charging current < the fourth charging current, wherein
when the charging pile operates during the super-peak hours, when performing the corresponding charging procedure based on the current at the grid-connected port and the preset charging current, the charging pile is specifically configured to:
suspend charging if the current at the grid-connected port is less than the first charging current; and
start charging if the current at the grid-connected port is greater than or equal to the first charging current, and perform charging using the current at the grid-connected port.

10. The charging control system for a charging pile according to claim 8, wherein the preset charging current comprises a first charging current, a second charging current, a third charging current, and a fourth charging current, and the second charging current < the first charging current < the third charging current < the fourth charging current, wherein
when the charging pile operates during the peak hours, when performing the corresponding charging procedure based on the current at the grid-connected port and the preset charging current, the charging pile is specifically configured to:
suspend charging if the current at the grid-connected port is less than the second charging current;
perform charging using the first charging current if the current at the grid-connected port is greater than or equal to the second charging current and less than or equal to the first charging current; and
perform charging using the current at the grid-connected port if the current at the grid-connected port is greater than the first charging current.

11. The charging control system for a charging pile according to claim 8, wherein the preset charging current comprises a first charging current, a second charging current, a third charging current, and a fourth charging current, and the second charging current < the first charging current < the third charging current < the fourth charging current, wherein
when the charging pile operates during the shoulder hours, when performing the corresponding charging procedure based on the current at the grid-connected port and the preset charging current, the charging pile is specifically configured to:
perform charging using the third charging current if the current at the grid-connected port is less than or equal to the third charging current; and
perform charging using the current at the grid-connected port if the current at the grid-connected port is greater than the third charging current.

12. The charging control system for a charging pile according to claim 8, wherein the preset charging current comprises a first charging current, a second charging current, a third charging current, and a fourth charging current, and the second charging current < the first charging current < the third charging current < the fourth charging current, wherein
when the charging pile operates during the off-peak hours, when performing the corresponding charging procedure based on the current at the grid-connected port and the preset charging current, the charging pile is specifically configured to:
perform charging using the fourth charging current if the current at the grid-connected port is less than or equal to the fourth charging current; and
perform charging using the current at the grid-connected port if the current at the grid-connected port is greater than the fourth charging current.

13. A charging control method based on the charging control system for a charging pile according to any one of claims 1 to 12, comprising:
determining a charging mode of a charging pile, wherein the charging mode comprises any one of a green power mode and an economy mode;
when the charging mode is the green power mode, charging a device to be charged using power generated by a photovoltaic system, and adjusting a charging current of the charging pile based on a current at a grid-connected port of an inverter until a power at the grid-connected port reaches zero; and
when the charging mode is the economy mode, purchasing electricity from a utility power supply for supplementation when power generated by the photovoltaic system is insufficient, and charging the device to be charged using a preset charging current; and when power generated by the photovoltaic system is sufficient, adjusting the charging current of the charging pile based on the current at the grid-connected port until the power at the grid-connected port reaches zero.

14. The charging control method according to claim 13, wherein when the charging mode is the green power mode and no communication connection is established between the charging pile and the inverter, the charging control method further comprises:
acquiring the current at the grid-connected port using an external current sensor, and performing a corresponding charging procedure based on the current at the grid-connected port; and
when the charging mode is the green power mode and a communication connection is established between the charging pile and the inverter, the charging control method further comprises:
performing a corresponding charging procedure based on the current at the grid-connected port and whether the inverter is photovoltaic-limited.

15. The charging control method according to claim 13, wherein when the charging mode is the economy mode, the charging control method further comprises:
setting super-peak hours, peak hours, shoulder hours, and off-peak hours using software or directly through the charging pile, and performing corresponding charging procedures based on the current at the grid-connected port and the preset charging current during the super-peak hours, the peak hours, the shoulder hours, and the off-peak hours.
